# EUROPÄISCHE PATENTANMELDUNG

(11) **EP 4 843 764 A1**
(43) Veröffentlichungstag der Anmeldung: **25.11.2026**
(21) Anmeldenummer: 26179206.3
(22) Anmeldetag: 18.05.2026
(51) Int. Cl.: B29D 30/72, B29D 30/06, B60C 13/00, G06T 15/04, G06T 19/20

(54) **VERFAHREN ZUR AUSBILDUNG EINER DREIDIMENSIONAL WIRKENDEN STRUKTUR AUF EINER ZU GESTALTENDEN OBERFLÄCHE**

(30) Priorität: 19.05.2025 DE 102025119281
(71) Anmelder: Continental Reifen Deutschland GmbH, 30175 Hannover (DE)
(72) Erfinder: Rittweger, Stefan, 30175 Hannover (DE)
(74) Vertreter: Continental Corporation

(57) **Zusammenfassung**

Die Erfindung betrifft ein Verfahren zur Ausbildung einer dreidimensional wirkenden Struktur (10) auf einer zu gestaltenden Oberfläche (100 ), umfassend die folgenden Schritte:
- Bereitstellen eines digitalen Fotos (1) einer dreidimensionalen Struktur als pixelbasiertes Bitmap in Graustufendarstellung;
- Reduzieren der Anzahl der Graustufen des pixelbasierten Bitmaps;
- Konvertieren des graustufenreduzierten pixelbasierten Bitmaps in eine Vektorgrafik (7);
- Zuordnen von unterschiedlichen Schraffuren zu den einzelnen Graustufenbereichen der Vektorgrafik (7);
- Ausbilden von Schraffurfeldern (18, 19, 20, 21) mit unterschiedlichen Schraffuren auf der zu gestaltenden Oberfläche (100) gemäß der im vorangehenden Verfahrensschritt auf Basis der Vektorgrafik (7) vorgenommenen Zuordnung zur Erzeugung einer dreidimensional wirkenden Struktur (10) in Anlehnung an die auf dem Foto (1) dargestellte dreidimensionale Struktur.

## Beschreibung

Die Erfindung betrifft ein Verfahren zur Ausbildung einer dreidimensional wirkenden Struktur auf einer zu gestaltenden Oberfläche. Insbesondere betrifft die Erfindung ein Verfahren zur Ausbildung einer dreidimensional wirkenden Struktur auf einer Seitenwand eines Reifens.

Es ist in vielen Anwendungsbereichen gewünscht, Oberflächen, die im Wesentlichen aus einem einzigen, einfarbigen Material bestehen, mit Strukturen in Form von dekorativen Mustern, informativen Aufschriften oder dergleichen zu versehen. Dabei kann es sich z.B. um die Gestaltung von Hausfassaden, Innenwänden, Werkzeuggriffen oder der Seitenwandbereiche von Fahrzeugreifen handeln.

Insbesondere aus dem Bereich der Fahrzeugreifen sind bereits vielfältige Verfahren bekannt, mit Hilfe derer die Seitenwandbereiche eines Fahrzeugreifens mit Mustern und/oder Aufschriften versehen werden können. So beschreibt die EP 2 842 766 B1 einen Fahrzeugreifen mit einer dekorativen Seitenwandschraffur.

Der grundlegende Gedanke bei der Herstellung von Seitenwandschraffuren besteht dabei darin, dass Oberflächenbereiche, die eine Oberflächenstruktur aufweisen, das einfallende Licht anders absorbieren und reflektieren als glatte Oberflächenbereiche. Ein Bereich mit einer größeren Oberflächenrauhigkeit absorbiert dabei im Allgemeinen mehr Licht als ein glatter Oberflächenbereich und erscheint damit dunkler.

Derartige Seitenwandschraffuren können beispielsweise in Form von lamellenartigen Strukturen realisiert sein, die aus einer Vielzahl von nebeneinander verlaufenden feinen Rippen ausgebildet sind. Über die Ausrichtung, die Höhe, den Abstand sowie den Flankenwinkel derartiger Rippen kann Einfluss genommen werden auf das Reflexions- bzw. Absorptionsverhalten des Lichts und durch Vorsehen von Bereichen mit unterschiedlichen Schraffuren können entsprechend Bereiche ausgebildet werden, die unterschiedlich hell bzw. dunkel erscheinen. Insbesondere ist es, wie in der EP 2 842 766 B1 beschrieben, auf diese Weise auch möglich, dreidimensionale Effekte zu erzielen.

Zur Ausbildung derartiger Oberflächenstrukturen auf den Seitenwänden von Reifen werden die Seitenwandschalen der den Rohreifen vulkanisierenden Vulkanisationsformen entsprechend gefräst, so dass dem Reifen während des Vulkanisationsprozesses neben dem Profil der Lauffläche auch eine entsprechende Seitenwandmarkierung eingeprägt wird.

Die vorliegende Erfindung hat sich die Aufgabe gestellt, ein Verfahren zur Ausbildung einer dreidimensional wirkenden Struktur auf einer zu gestaltenden Oberfläche bereitzustellen, welches es erlaubt, auf einfache Art und Weise eine besonders plastisch wirkende Oberflächengestaltung zu erreichen.

Diese Aufgabe wird gelöst durch ein Verfahren mit den Merkmalen des Patentanspruchs 1.

Vorteilhafte Ausgestaltungen und Weiterbildungen der Erfindung sind Gegenstand der abhängigen Ansprüche.

Gemäß Patentanspruch 1 betrifft die Erfindung ein Verfahren zur Ausbildung einer dreidimensional wirkenden Struktur auf einer zu gestaltenden Oberfläche, umfassend die folgenden Schritte:
- Bereitstellen eines digitalen Fotos einer dreidimensionalen Struktur als pixelbasiertes Bitmap in Graustufendarstellung;
- Reduzieren der Anzahl der Graustufen des pixelbasierten Bitmaps;
- Konvertieren des graustufenreduzierten pixelbasierten Bitmaps in eine Vektorgrafik;
- Zuordnen von unterschiedlichen Schraffuren zu den einzelnen Graustufenbereichen der Vektorgrafik;
- Ausbilden von Schraffurfeldern mit unterschiedlichen Schraffuren auf der zu gestaltenden Oberfläche gemäß der im vorangehenden Verfahrensschritt auf Basis der Vektorgrafik vorgenommenen Zuordnung zur Erzeugung einer dreidimensional wirkenden Struktur in Anlehnung an die auf dem Foto dargestellte dreidimensionale Struktur.

Mit anderen Worten dienen Fotografien von realen dreidimensionalen Strukturen als Grundlage für das erfindungsgemäße Verfahren. Solche Fotografien weisen als pixelbasierte Bitmaps in Graustufendarstellung üblicherweise 256 Graustufen auf. Die Vielfalt der Graustufen sorgt dabei für weiche Farbverläufe auf dem Foto. Zur Herstellung klarerer Konturen wird diese Anzahl an Graustufen mit Hilfe eines Bildbearbeitungsprogramms erfindungsgemäß zunächst deutlich reduziert, beispielsweise auf vier Graustufen.

In einem anschließenden Verfahrensschritt wird das graustufenreduzierte pixelbasierte Bitmap mit Hilfe eines Vektorprogramms in eine Vektorgrafik konvertiert. Auf diese Weise wird das aus einer Vielzahl einzelner Pixel bestehende Bild in ein Bild umgewandelt, welches geometrische Formen umfasst, die von mathematisch definierten Vektorlinien und -kurven, sogenannten Pfaden, begrenzt sind. Den einzelnen geometrischen Formen können dabei unterschiedliche Konturstärken und Füllungen zugeordnet sein. Vektorgrafiken sind grundsätzlich besonders gut geeignet für Anwendungen, bei denen eine gute Skalierbarkeit bei gleichbleibend hoher Auflösung erforderlich ist.

Ausgehend von einem pixelbasierten Bitmap mit beispielsweise lediglich vier Graustufen erhält man durch die Konvertierung in eine Vektorgrafik eine Darstellung geometrischer Formen bzw. Flächen, die jeweils von mathematisch definierten Begrenzungslinien umrissen sind. Den einzelnen geometrischen Flächen sind dabei entsprechend den beispielsweise vier Graustufen des Bitmaps insgesamt vier unterschiedliche Farbfüllungen zugeordnet.

Basierend auf einer solchen Vektorgrafik werden erfindungsgemäß in einem nächsten Schritt den unterschiedlich eingefärbten Flächen bestimmte Schraffuren zugeordnet. Mit anderen Worten werden entsprechend der Anzahl an unterschiedlichen Graustufen unterschiedliche Schraffuren für die jeweiligen Bereiche ausgewählt. Beispielsweise können weiß eingefärbte Flächen ohne Schraffurzuordnung bleiben, während schwarz und grau eingefärbten Flächen jeweils unterschiedliche Schraffuren zugeordnet werden. Eine Schraffur kann dabei beispielsweise eine Vielzahl von nebeneinander verlaufenden feinen Rippen umfassen. Zwei unterschiedliche Schraffuren können sich beispielsweise durch die Ausrichtung, die Höhe, den Abstand sowie den Flankenwinkel der einzelnen Rippen voneinander unterscheiden, was nachfolgend noch genauer erläutert werden wird. Grundsätzlich führen unterschiedliche Schraffuren zu einem unterschiedlichen Absorptions- und Reflexionsverhalten des einfallende Lichts. Auf diese Weise wirken unterschiedlich schraffierte Flächen unterschiedlich hell bzw. dunkel. Dabei ist im allgemeinen bekannt, wie die einzelnen Schraffuren zu gestalten sind, um die gewünschten Farbeffekte und insbesondere Farbunterschiede zwischen den einzelnen Flächen zu erreichen.

Abschließend werden ausgehend von dieser Zuordnung von Schraffuren zu einzelnen Flächenbereichen auf Basis der Vektorgrafik Schraffurfelder mit unterschiedlichen Schraffuren auf der zu gestaltenden Oberfläche ausgebildet, um so auf der Oberfläche eine dreidimensional wirkende Struktur in Anlehnung an die auf dem zu Grunde liegenden Foto dargestellte dreidimensionale Struktur zu erzeugen.

Es hat sich gezeigt, dass trotz der deutlichen Reduzierung der Graustufen überraschenderweise sehr gute dreidimensionale Effekte auf einer Oberfläche erzielt werden können. Insbesondere lassen sich mittels des erfindungsgemäßen Verfahrens auch kompliziertere Grafiken auf einfache Weise umsetzen.

Gemäß einer Ausgestaltung des erfindungsgemäßen Verfahrens wird die Anzahl der Graustufen des pixelbasierten Bitmaps auf drei bis zehn Graustufen reduziert. Ausgehend von einem pixelbasierten Bitmap mit typischerweise 256 Graustufen kann die Anzahl der Graustufen beispielsweise auf zehn oder acht oder sechs Graustufen reduziert werden. Gemäß einer besonders vorteilhaften Ausführungsvariante des erfindungsgemäßen Verfahrens wird die Anzahl der Graustufen des pixelbasierten Bitmaps auf vier Graustufen reduziert. Je nach Beschaffenheit des Ausgangsbilds lässt sich durch eine Reduzierung auf vier Graustufen in der Regel bereits ein sehr guter plastischer Effekt auf der zu gestaltenden Oberfläche realisieren.

Eine Ausgestaltung des Verfahrens sieht vor, dass die dreidimensional wirkende Struktur Schraffurfelder umfasst, die jeweils eine Vielzahl von feinen Rippen umfassen. Die Rippen können senkrecht zu ihrer Längserstreckung einen im Wesentlichen dreieckigen Querschnitt aufweisen. Grundsätzlich sind auch andere Formen von Schraffuren denkbar, beispielsweise Noppen, Borsten oder dergleichen. Insbesondere kann die dreidimensionale Struktur auch Kombinationen von Schraffurfeldern mit unterschiedlichen Schraffuren umfassen, beispielsweise können einzelne Schraffurfelder Rippen umfassen, während andere Schraffurfelder Noppen und/oder Borsten und/oder andere Oberflächenstrukturen umfassen. Darüber hinaus können stets auch Flächen vorgesehen sein, die keinerlei Schraffur tragen und als glatte Flächen verbleiben. Glatte Flächen reflektieren das einfallende Licht stärker als schraffierte Flächen, so dass Flächen ohne Schraffur entsprechend heller erscheinen.

Zur Erzielung unterschiedlicher Hell-Dunkel-Effekte kann es erfindungsgemäß vorgesehen sein, dass die dreidimensional wirkende Struktur Schraffurfelder umfasst, die sich hinsichtlich der Ausrichtung der Rippen und/oder der Höhe der Rippen und/oder des Abstands zwischen benachbarten Rippen und/oder des Flankenwinkels der Rippen unterscheiden. Dabei gilt im Allgemeinen, dass eine Schraffur umso dunkler wirkt, je höher und je steiler die Rippen ausgebildet sind. So wirkt eine Schraffur mit einer Höhe der Rippen von etwa 0,3 mm im Allgemeinen dunkler als eine Schraffur mit einer Höhe der Rippen von etwa 0,2 mm. Ebenso wirkt eine Schraffur mit Rippen, die einen Flankenwinkel von etwa 55° aufweisen, dunkler als eine Schraffur mit Rippen, die einen Flankenwinkel von etwa 90° aufweisen. Als Flankenwinkel wird dabei derjenige Winkel bezeichnet, den die beiden eine Rippe begrenzenden Seitenflanken miteinander einschließen. Ein typischer Abstand zwischen benachbarten Rippen kann beispielsweise in einem Bereich zwischen 0,55 und 0,6 mm liegen. Als Abstand wird dabei der Abstand benachbarter Rippen im Bereich ihrer Basis aufgefasst.

Gemäß einer Ausführungsvariante dient das erfindungsgemäße Verfahren zur Ausbildung einer dreidimensional wirkenden Struktur auf einer Reifenseitenwand. Ein solches Verfahren umfasst folgende zusätzliche Schritte:
- Fertigen einer Vulkanisationsform als Negativform, indem unter Zugrundelegung der Informationen der Vektorgrafik die den einzelnen Schraffurfeldern zugeordneten unterschiedlichen Schraffuren mittels eines Fräswerkzeugs als Negativ in die Vulkanisationsform eingefräst werden;
- Vulkanisieren des Rohreifens in der Vulkanisationsform.

Mit anderen Worten können mit Hilfe des erfindungsgemäßen Verfahrens Seitenwandschraffuren auf Fahrzeugreifen ausgebildet werden, indem die Vulkanisationsform, in der der Rohreifen vulkanisiert wird, entsprechend der auf Basis der Vektorgrafik vorgenommenen Zuordnung von unterschiedlichen Schraffur zu definierten Flächenbereichen als Negativform gefräst wird. Das Fräswerkzeug fährt zu diesem Zweck die durch die Vektorgrafik festgelegten Flächen ab und versieht sie mit einem Negativ der jeweils zugeordneten Schraffur. Durch das Einbringen des Rohreifens in die Vulkanisationsform und den anschließenden Vulkanisationsprozess werden dem Reifen die vorgesehenen Rippenstrukturen eingeprägt.

Da die auf der Reifenseitenwand ausgebildeten, unterschiedlich schraffierten Bereiche das einfallende Licht unterschiedlich stark absorbieren und reflektieren, erscheinen die jeweiligen Bereiche unterschiedlich hell bzw. dunkel. Insbesondere kann auf diese Weise auch eine Schattenwirkung simuliert werden. Das Ergebnis ist eine sehr plastisch wirkende Darstellung der auf dem zugrundeliegenden Foto dargestellten Struktur auf der Reifenseitenwand.

Variationen in der Schraffur können auf sehr unterschiedliche Art und Weise herbeigeführt werden.

So kann die dreidimensional wirkende Struktur Schraffurfelder umfassen, deren Rippen einen Höhenunterschied von 0,05 - 0,15 mm aufweisen. Sie kann alternativ oder zusätzlich Schraffurfelder umfasst, deren Rippen sich in ihren Flankenwinkeln um mindestens 20° unterscheiden.

Auch über die Ausrichtung der Rippen in den einzelnen Schraffurfeldern können Unterschiede in der Hell-Dunkel-Wirkung erzeugt werden. So kann die dreidimensional wirkende Struktur Schraffurfelder umfassen, deren Rippen parallel zueinander ausgerichtet sind. Dabei kann es vorgesehen sein, dass die dreidimensional wirkende Struktur erste Schraffurfelder und zweite Schraffurfelder mit jeweils parallel ausgerichteten Rippen umfasst, wobei sich die Rippen der ersten Schraffurfelder in ihrer Winkelausrichtung bezüglich einer radialen Richtung von den Rippen der zweiten Schraffurfelder unterscheiden. Mit anderen Worten können bereits durch eine unterschiedliche Winkelausrichtung der Rippen in einzelnen Schraffurfeldern Bereiche erzeugt werden, die unterschiedlich hell bzw. dunkel wirken. So können zwei unmittelbar aneinander angrenzende Schraffurfelder sich hinsichtlich der Ausrichtung ihrer Rippen um mindestens 25° unterscheiden. Insbesondere kann der Winkelunterschied beispielsweise 90° betragen, wobei die Rippen jeweils so ausgerichtet sein können, dass sie mit einer radialen Richtung jeweils einen Winkel von 45° einschließen.

Neben einer parallelen Ausrichtung der Rippen kann die dreidimensional wirkende Struktur auch Schraffurfelder umfassen, deren Rippen radial zur Reifenmitte hin ausgerichtet sind. Eine radiale Ausrichtung zur Reifenmitte hin geht dabei bei einer Ausführung der Rippen als Geraden mit einer Veränderung des Abstandes benachbarter Rippen voneinander einher. Dies kann je nach Lichteinfall dazu führen, dass das jeweilige Schraffurfeld in seiner Farbwirkung als nicht einheitlich wahrgenommen wird.

Um eine einheitlichere Farbwirkung einzelner Bereiche zu erreichen, kann es gemäß einer Ausgestaltung des Verfahrens vorgesehen sein, dass die dreidimensional wirkende Struktur Schraffurfelder umfasst, deren Rippen einen bogenförmigen Verlauf aufweisen, wobei der Abstand zwischen zwei benachbarten Rippen konstant ist. Ein deutlicher Farbunterschied zwischen zwei Schraffurfeldern kann dabei erzeugt werden, indem die Rippen in dem einen Schraffurfeld einen bogenförmigen Verlauf mit einer vorgegebenen Krümmung aufweisen und die Rippen in dem anderen Schraffurfeld einen hierzu genau gespiegelten bogenförmigen Verlauf mit entgegengesetzter Krümmung aufweisen.

Schließlich kann es zur Erzielung besonders dunkel wirkender Bereiche auf der zu gestaltenden Oberfläche auch vorgesehen sein, dass die dreidimensional wirkende Struktur Schraffurfelder umfasst, deren Rippen einen komplexeren, beispielsweise einen zickzackförmigen Verlauf aufweisen. Entsprechende Negativformen solcher Rippen können beispielsweise mit Hilfe eines Lasers in der Vulkanisationsform ausgebildet werden. Ein zickzackförmiger Verlauf der Rippen hat eine weitgehend ungerichtete Reflexion des einfallenden Lichts zur Folge, so dass mit derartigen Rippen versehene Bereiche besonders dunkel wirken. Von daher ist eine solche Art der Schraffur besonders geeignet, um einen Schattenschlag zu simulieren.

Im Folgenden wird die Erfindung anhand eines Ausführungsbeispiels und unter Bezugnahme auf die beigefügten Zeichnungen näher erläutert. Es zeigen:
- Figur 1:: ein digitales Foto von Wassertropfen auf einer ebenen Fläche in Graustufendarstellung;
- Figur 2:: das Foto aus Figur 1, wobei die Anzahl der Graustufen auf vier Graustufen reduziert wurde;
- Figur 3:: das Bild aus Figur 2, umgewandelt in eine Vektorgrafik und mit zugeordneten Schraffuren in einer vergrößerten Detaildarstellung;
- Figur 4:: ein Ausschnitt aus einer Darstellung gemäß Figur 3, angepasst auf eine Reifenseitenwand;
- Figur 5:: ein Foto eines Seitenwandabschnitts eines Reifens, auf welchen entsprechend der Darstellung aus Figur 4 unterschiedliche Schraffuren aufgebracht wurden.

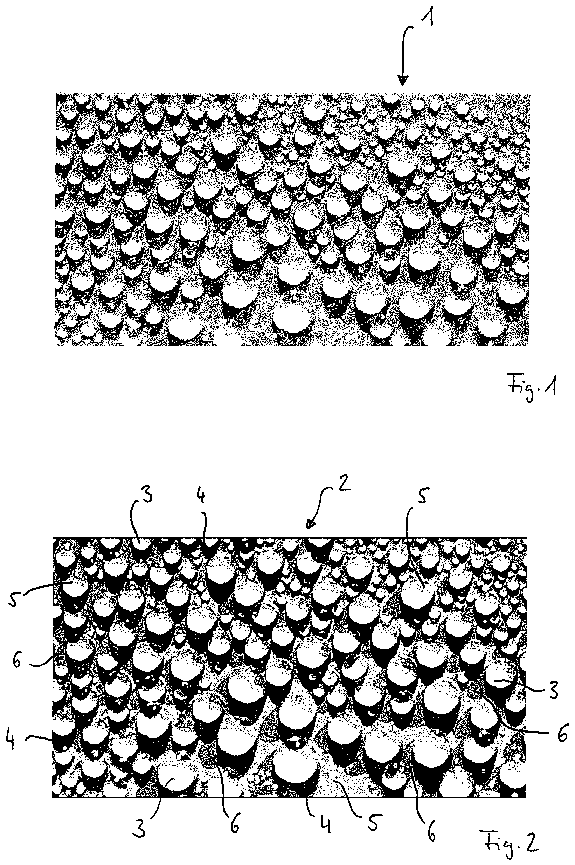

Figur 1 zeigt ein im Ganzen mit 1 bezeichnetes Foto einer mit Wassertropfen betropften ebenen Oberfläche. Bei dem Foto 1 handelt es sich um ein pixelbasiertes Bitmap mit 256 Graustufen. Die zahlreichen Graustufen sorgen für weiche Farbverläufe auf dem Foto 1. Insbesondere weist das Foto 1 eine ausgeprägte Licht-Schatten-Wirkung auf. Das Foto 1 dient als Ausgangspunkt für das erfindungsgemäße Verfahren.

In einem ersten Verfahrensschritt wird zur Herstellung klarerer Konturen die Anzahl der Graustufen des Fotos 1 deutlich reduziert. Bei dem gezeigten Ausführungsbeispiel wurde die Anzahl der ursprünglich 256 Graustufen auf vier reduziert. Das Bild liegt nun, wie in Figur 2 dargestellt, als graustufenreduziertes Foto 2 vor. Gleichwohl handelt es sich immer noch um ein pixelbasiertes Bitmap. Die Umwandlung des Fotos 1 in das graustufenreduzierte Foto 2 kann mit Hilfe eines Bildbearbeitungsprogramms erfolgen, beispielsweise mit Hilfe des Programms *Adobe Photoshop* des Softwareherstellers Adobe. Anhand der Figur 2 wird unmittelbar ersichtlich, dass das graustufenreduzierte Foto 2 nur noch vier Graustufen aufweist. Es umfasst entsprechend Flächen 3, die weiß eingefärbt sind, Flächen 4, die schwarz eingefärbt sind, Flächen 5, die hellgrau eingefärbt sind und Flächen 6, die dunkelgrau eingefärbt sind. Die einzelnen Flächen 3, 4, 5, 6 sind dabei nach wie vor aus Pixeln zusammengesetzt.

In einem anschließenden Verfahrensschritt wird das graustufenreduzierte Foto 2 mit Hilfe eines Vektorprogramms in eine Vektorgrafik 7 konvertiert. Mit anderen Worten wird das aus einer Vielzahl einzelner Pixel bestehende graustufenreduzierte Foto 2 in eine Vektorgrafik 7 umgewandelt, welche geometrische Formen bzw. Flächen umfasst, die von mathematisch definierten Pfaden begrenzt sind. Ein geeignetes Vektorprogramm zur Konvertierung des graustufenreduzierten Fotos 2 in die Vektorgrafik 7 ist beispielsweise das Programm *CorelDRAW* der Corel Corporation. Den einzelnen geometrischen Formen innerhalb der Vektorgrafik 7 sind dabei entsprechend den vier Graustufen des graustufenreduzierten Fotos 2 insgesamt vier unterschiedliche Farbfüllungen zugeordnet.

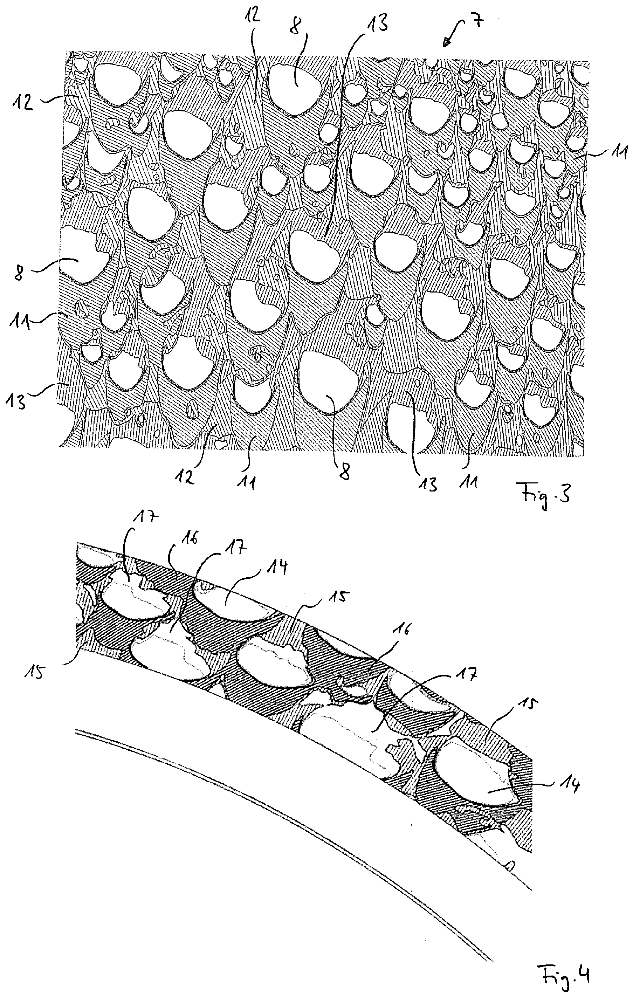

Diesen unterschiedlichen Farbfüllungen der Vektorgrafik 7 werden nachfolgend unterschiedliche Schraffuren zugeordnet, was in Figur 3 dargestellt ist. Mit anderen Worten werden bei dem dargestellten Ausführungsbeispiel vier unterschiedliche Schraffuren für die vier unterschiedlichen Farbtöne der einzelnen Flächen ausgewählt. Die Darstellung der Figur 3 zeigt dabei weiße Flächen 8 ohne Schraffur sowie Flächen 11, 12 und 13 mit jeweils unterschiedlichen Schraffuren. Eine Schraffur umfasst dabei eine Vielzahl von nebeneinander verlaufenden feinen Rippen. Wie aus Figur 3 unmittelbar ersichtlich, unterscheiden sich die Schraffuren der Flächen 11, 12 und 13 durch die Winkelausrichtung der Rippen. Darüber hinaus können die Schraffuren der Flächen 11, 12 und 13 hinsichtlich der Höhe, des Abstands sowie des Flankenwinkels der einzelnen Rippen variieren.

Figur 4 zeigt einen Ausschnitt aus einer Darstellung gemäß Figur 3, angepasst auf eine Reifenseitenwand. Auch hier sind Flächen mit unterschiedlichen Schraffuren voneinander abgegrenzt. Im Einzelnen umfasst die Darstellung Flächen 14 ohne Schraffur, Flächen 15 mit einer im wesentlich radial verlaufenden Schraffur, sowie Flächen 16 und 17 mit Schraffuren, die mit der radial ausgerichteten Schraffur jeweils einen Winkel von etwa 45° einschließen, derart, dass die Schraffuren der Flächen 16 und 17 miteinander einen Winkel von etwa 90° einschließen. Zusätzlich können sich die einzelnen Schraffuren, wie oben im Zusammenhang mit der Figur 3 gesagt, im Hinblick auf weitere Schraffurspezifikationen unterscheiden.

Abschließend werden ausgehend von dieser Zuordnung von spezifischen Schraffuren zu einzelnen Flächenbereichen entsprechende Schraffurfelder 18, 19, 20, 21 auf einer zu gestaltenden Oberfläche 100 ausgebildet, um so eine dreidimensional wirkende Struktur 10 in Anlehnung an die auf dem zu Grunde liegenden Foto 1 dargestellte, mit Wassertropfen betropfte Oberfläche zu erzeugen.

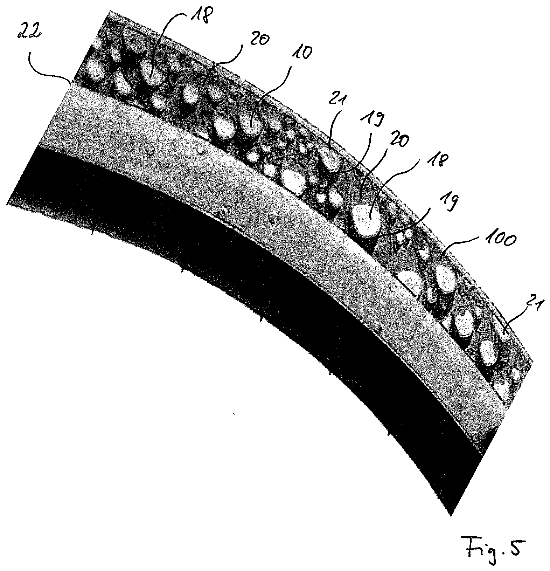

Bei dem hier dargestellten Ausführungsbeispiel werden die entsprechenden Schraffurfelder 18, 19, 20, 21 auf einer Reifenseitenwand 22 eines Reifens ausgebildet, von dem in der Figur 5 lediglich ein Seitenwandabschnitt dargestellt ist. Hierzu wird eine hier nicht näher dargestellte Vulkanisationsform entsprechend der Zuordnung von individuellen Schraffuren zu definierten Flächenbereichen als Negativform gefräst. Das Fräswerkzeug fährt zu diesem Zweck die gemäß Figur 4 festgelegten Flächen ab und versieht sie mit einem Negativ der jeweils zugeordneten Schraffur. Durch das Einbringen des Rohreifens in die Vulkanisationsform und den anschließenden Vulkanisationsprozess werden dem Reifen die vorgesehenen Rippenstrukturen auf seiner Oberfläche 100 eingeprägt.

Da die auf der Reifenseitenwand 22 ausgebildeten, unterschiedlich schraffierten Bereiche das einfallende Licht unterschiedlich stark absorbieren und reflektieren, erscheinen die jeweiligen Bereiche unterschiedlich hell bzw. dunkel. Insbesondere kann auf diese Weise auch eine Schattenwirkung simuliert werden. Das Ergebnis ist, wie aus Figur 5 ersichtlich, eine plastische, bildhaft wirkende Simulation der betropften Fläche auf der Reifenseitenwand 22.

### Bezugszeichenliste:

- 1: Foto
- 2: graustufenreduziertes Foto
- 3: Fläche
- 4: Fläche
- 5: Fläche
- 6: Fläche
- 7: Vektorgrafik
- 8: Fläche
- 10: dreidimensional wirkende Struktur
- 11: Fläche
- 12: Fläche
- 13: Fläche
- 14: Fläche
- 15: Fläche
- 16: Fläche
- 17: Fläche
- 18: Schraffurfeld
- 19: Schraffurfeld
- 20: Schraffurfeld
- 21: Schraffurfeld
- 22: Reifenseitenwand
- 100: Oberfläche

## Patentansprüche

1. Verfahren zur Ausbildung einer dreidimensional wirkenden Struktur (10) auf einer zu gestaltenden Oberfläche (100 ), umfassend die folgenden Schritte:
- Bereitstellen eines digitalen Fotos (1) einer dreidimensionalen Struktur als pixelbasiertes Bitmap in Graustufendarstellung;
- Reduzieren der Anzahl der Graustufen des pixelbasierten Bitmaps;
- Konvertieren des graustufenreduzierten pixelbasierten Bitmaps in eine Vektorgrafik (7);
- Zuordnen von unterschiedlichen Schraffuren zu den einzelnen Graustufenbereichen der Vektorgrafik (7);
- Ausbilden von Schraffurfeldern (18, 19, 20, 21) mit unterschiedlichen Schraffuren auf der zu gestaltenden Oberfläche (100) gemäß der im vorangehenden Verfahrensschritt auf Basis der Vektorgrafik (7) vorgenommenen Zuordnung zur Erzeugung einer dreidimensional wirkenden Struktur (10) in Anlehnung an die auf dem Foto (1) dargestellte dreidimensionale Struktur.

2. Verfahren nach Anspruch 1, **dadurch gekennzeichnet, dass** die Anzahl der Graustufen des pixelbasierten Bitmaps auf drei bis zehn Graustufen reduziert wird.

3. Verfahren nach Anspruch 1 oder 2, **dadurch gekennzeichnet, dass** die dreidimensional wirkende Struktur (10) Schraffurfelder (18, 19, 20, 21) umfasst, die jeweils eine Vielzahl von feinen Rippen umfassen.

4. Verfahren nach Anspruch 3, **dadurch gekennzeichnet, dass** die dreidimensional wirkende Struktur (13) Schraffurfelder (18, 19, 20, 21) umfasst, die sich hinsichtlich der Ausrichtung der Rippen und/oder der Höhe der Rippen und/oder des Abstands zwischen benachbarten Rippen und/oder des Flankenwinkels der Rippen unterscheiden.

5. Verfahren nach einem der Ansprüche 3 oder 4 zur Ausbildung einer dreidimensional wirkenden Struktur (10) auf einer Reifenseitenwand (22 ), umfassend weiterhin die Schritte:
- Fertigen einer Vulkanisationsform als Negativform, indem unter Zugrundelegung der Informationen der Vektorgrafik (7) die den einzelnen Flächen (14, 15, 16, 17) zugeordneten unterschiedlichen Schraffuren mittels eines Fräswerkzeugs als Negativ in die Vulkanisationsform eingefräst werden;
- Vulkanisieren des Rohreifens in der Vulkanisationsform.

6. Verfahren nach Anspruch 5, **dadurch gekennzeichnet, dass** die dreidimensional wirkende Struktur (10) Schraffurfelder (18, 19, 20, 21) umfasst, deren Rippen einen Höhenunterschied von 0,05 - 0,15 mm aufweisen.

7. Verfahren nach Anspruch 5 oder 6, **dadurch gekennzeichnet, dass** die dreidimensional wirkende Struktur (10) Schraffurfelder (18, 19, 20, 21) umfasst, deren Rippen sich in ihren Flankenwinkeln um mindestens 20° unterscheiden.

8. Verfahren nach einem der Ansprüche 5 bis 7, **dadurch gekennzeichnet, dass** die dreidimensional wirkende Struktur (10) Schraffurfelder (18, 19, 20, 21) umfasst, deren Rippen parallel zueinander ausgerichtet sind.

9. Verfahren nach Anspruch 8, **dadurch gekennzeichnet, dass** die dreidimensional wirkende Struktur (10) erste Schraffurfelder (20) und zweite Schraffurfelder (21) mit jeweils parallel ausgerichteten Rippen umfasst, wobei sich die Rippen der ersten Schraffurfelder (20) in ihrer Winkelausrichtung bezüglich einer radialen Richtung von den Rippen der zweiten Schraffurfelder (21) unterscheiden.

10. Verfahren nach einem der Ansprüche 5 bis 9, **dadurch gekennzeichnet, dass** die dreidimensional wirkende Struktur (10) Schraffurfelder (18, 19, 20, 21) umfasst, deren Rippen radial zur Reifenmitte hin ausgerichtet sind.

11. Verfahren nach einem der Ansprüche 5 bis 10, **dadurch gekennzeichnet, dass** die dreidimensional wirkende Struktur (10) Schraffurfelder (18, 19, 20, 21) umfasst, deren Rippen einen bogenförmigen Verlauf aufweisen, wobei der Abstand zwischen zwei benachbarten Rippen konstant ist.

12. Verfahren nach einem der Ansprüche 5 bis 11, **dadurch gekennzeichnet, dass** die dreidimensional wirkende Struktur (10) Schraffurfelder (18, 19, 20, 21) umfasst, deren Rippen einen zickzackförmigen Verlauf aufweisen.
